# Europäisches Patentamt

## European Patent Office

## Office européen des brevets

(19)

(11) Veröffentlichungsnummer: **0 198 103**
**B1**

(12) # EUROPÄISCHE PATENTSCHRIFT

(45) Veröffentlichungstag der Patentschrift:
05.07.89

(21) Anmeldenummer: **85104771.2**

(22) Anmeldetag: **19.04.85**

(51) Int. Cl.⁴: **H 04 N 9/64**

(54) **Schaltungsanordnung zur Versteilerung von Farbsignalsprüngen.**

(43) Veröffentlichungstag der Anmeldung:
22.10.86 Patentblatt 86/43

(45) Bekanntmachung des Hinweises auf die Patenterteilung:
05.07.89 Patentblatt 89/27

(84) Benannte Vertragsstaaten:
DE FR GB IT NL

(56) Entgegenhaltungen:
DE-A- 1 562 170

IEEE TRANSACTIONS ON CONSUMER ELECTRONICS,
Band CE-19, Nr. 4, November 1983; K. JUHNKE "Four
standard colour decoder with picture improvement",
Seiten 451-461
ELECTRONICS, Band 54, Nr. 16, 11. August 1981, New
York, USA; T. FISCHER "Digital VLSI breeds
next-generation TV receivers", Seiten 97-103

(73) Patentinhaber: **Deutsche ITT Industries GmbH,**
**Hans-Bunte-Strasse 19 Postfach 840, D-7800 Freiburg**
**(DE)**

(72) Erfinder: **Flamm, Peter Michael, Dipl.-Ing. (FH),**
**Stefan-Meier-Strasse 167, D-7800 Freiburg i.Br. (DE)**
Erfinder: **Deubert, Rolf, Dipl.-Ing., Speckbacherweg 5,**
**D-7800 Freiburg i.Br. (DE)**

## Beschreibung

Die Erfindung betrifft eine Schaltungsanordnung zur Versteilerung von Farbsignalsprüngen in Farbfernsehempfängern mit einem Flankensteilheitsdetektor, der bei Überschreiten eines vorgebbaren Amplituden-Schwellwerts ein Schaltsignal abgibt, durch das an den jeweiligen Ausgang der beiden Farbdifferenzkanäle für die Dauer von deren systembedingter Anstiegszeit ein Ersatzsignal gelegt wird, vgl. den Oberbegriff des Anspruchs 1. Eine derartige Schaltungsanordnung ist in der Veröffentlichung der Firma Valvo «Technische Information 840 228 (= 28.02.1984) S. 1–13: Versteilerung von Farbsignalsprüngen und Leuchtdichtesignal-Verzögerung mit der Schaltung TDA 4560» beschrieben.

Die im Vergleich zur Bandbreite des Leuchtdichtekanals stark verringerte Bandbreite des Farbdifferenzkanals, die bei den heute üblichen Fernsehnormen nur etwa ⅕ von der des Leuchtdichtekanals beträgt, führt dazu, daß bei Farbsignalsprüngen, also beispielsweise an den Kanten des üblichen Test-Farb-Balkensignals, die Farbübergänge verwaschen und unscharf sind, da aus der kleinen Übertragungsbandbreite eine etwa 5mal so lange Dauer des Farbsignalübergangs im Vergleich zum zugeordneten Leuchtdichtesignal-Übergang resultiert. Mit der vorbeschriebenen Schaltung werden die relativ flach verlaufenden Farbsignalübergänge an Kanten versteilert, was im wesentlichen durch entsprechende Verzögerung der Farbdifferenz- und des Leuchtdichtesignals in Verbindung mit einer versteilerten Flanke der Farbdifferenzsignale am Ende der Verzögerung durch entsprechende Analogschaltungen erfolgt, da die Farbdifferenzsignale und das Leuchtdichtesignal wie üblich in analoger Form vorliegen und verarbeitet werden.

Demgegenüber liegt der in den Ansprüchen gekennzeichneten Erfindung die Aufgabe zugrunde, das bei Analogschaltungen vorbeschriebene Prinzip so zu modifizieren, daß es bei an sich bekannten Farbfernsehempfängern mit digitaler Signalverarbeitung (vgl. «Electronics», 11. August 1981, Seiten 97 bis 103) anwendbar ist, wobei der Flankensteilheitsdetektor nicht nur auf ein Kriterium, nämlich den vorgebbaren Amplituden-Schwellwert entsprechend der vorbeschriebenen Anordnung, sondern auf ein weiteres Kriterium ansprechen soll.

Über die in der Aufgabenlösung bereits liegenden Vorteile hinausgehende Vorteile ergeben sich aus der nun folgenden Beschreibung der Erfindung anhand der Figuren der Zeichnungen.

Fig. 1 zeigt in Form eines Blockschaltbildes ein erstes Ausführungsbeispiel der Erfindung;

Fig. 2 zeigt ebenfalls in Form eines Blockschaltbildes eine ausgestaltende Weiterbildung der Anordnung nach Fig. 1;

Fig. 3 zeigt als Blockschaltbild eine Ausführungsform für die Flankensteilheitsdetektoren in den Fig. 1 und 2;

Fig. 4 zeigt verschiedene Kurven zur Erläuterung der prinzipiellen Wirkungsweise der Erfindung, und

Fig. 5 zeigt Kurven zur Erläuterung der Wirkungsweise der Weiterbildung nach Fig. 2.

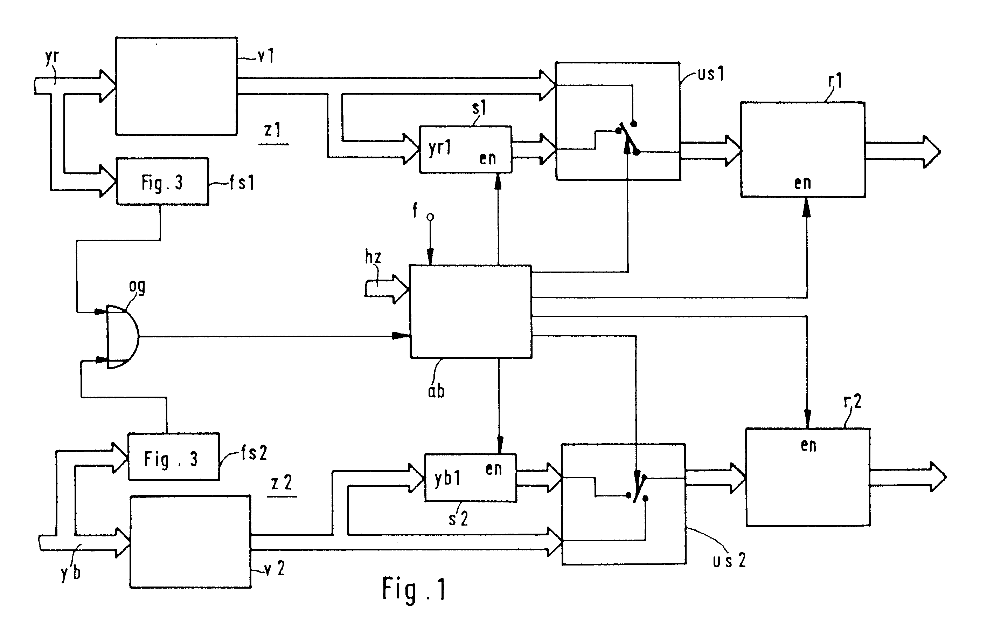

Beim Blockschaltbild der Fig. 1 liegen die digitalen Farbdifferenz-Signale yr, yb im Basisband mit der Frequenz des Taktsignals f, das die vierfache Farbhilfsträgerfrequenz hat, vor, d.h. die einzelnen Datenwörter folgen mit dieser Frequenz aufeinander. Falls für die Farbdifferenzsignal-Demodulation eine Subharmonische des Taktsignals f, also beispielsweise die Farbhilfsträgerfrequenz selbst, gewählt ist, wie dies bei bekannten digitalen Farbfernsehempfängern der Fall sein kann, so sind diese Digitalsignale durch digitale Interpolation auf die erwähnte Signalfolgefrequenz des Taktsignals f zu bringen.

In Fig. 1 ist nun für jedes der beiden Farbdifferenzsignale yr, yb ein eigener Schaltungszweig vorgesehen, die untereinander gleichen Aufbau haben, wobei dem Rot-Farbdifferenzkanal der Schaltungszweig z1 und dem Blau-Farbdifferenzkanal der Schaltungszweig z2 zugeordnet ist. Im Schaltungszweig z1 liegt das Rot-Farbdifferenzsignal yr am Eingang des ersten Verzögerers v1 bzw. des ersten digitalen Flankensteilheitsdetektors fs1. Der Ausgang des ersten Verzögerers v1 liegt am Eingang des ersten Speichers s1 und am einen Eingang des ersten Umschalters us1, während der Ausgang des ersten Speichers s1 am anderen Eingang des ersten Umschalters us1 angeschlossen ist, dessen Ausgang am Eingang des ersten Ausgangsregisters r1 liegt.

Der zweite Schaltungszweig z2, dem die Blau-Farbdifferenzsignale yb eingangsseitig zugeführt sind, ist, was die einzelnen Teilschaltungen und deren Verbindung untereinander betrifft, identisch aufgebaut und enthält den jeweils zweiten digitalen Flankensteilheitsdetektor fs2, Verzögerer v2, Speicher s2, Umschalter us2 und Ausgangsregister r2.

Das jeweilige Ausgangssignal der beiden Flankensteilheitsdetktoren fs1, fs2 ist vom ersten bzw. zweiten Eingang des ODER-Gatters og zugeführt, dessen Ausgang mit dem ersten Eingang der Ablaufsteuerung ab verbunden ist. Deren zweitem Eingang ist das Taktsignal f und deren drittem Eingang das Digitalsignal hz zugeführt, mit dem die Dauer der systembedingten Anstiegszeit der Farbdifferenzkanäle entsprechende Haltezeit vorgegeben werden kann. Die verschiedenen Ausgänge der Ablaufsteuerung ab sind mit dem jeweiligen Speicherübernahme-Eingang en des ersten und zweiten Speichers s1, s2 sowie des ersten und zweiten Ausgangsregisters r1, r2 und mit dem jeweiligen Schalter-Steuereingang der beiden Umschalter us1, us2 verbunden.

Die Ablaufsteuerung ab steuert die eben erwähnten Teilschaltungen derart, daß in den entsprechenden Speicher s1 bzw. s2 ein bei einem Zwischenwert der Haltezeit auftretender Rot- bzw. Blau-Farbdifferenzsignal-Wert yr1 bzw. yb1 eingelesen wird. Dieser Zwischenwert der Haltezeit liegt vorzugsweise in ihrer Mitte. Ferner bewirkt die Ablaufsteuerung, daß der Speicherinhalt des jeweiligen Speichers s1, s2 über den zugeordneten Umschalter us1 bzw. us2 beim entsprechenden Zwischenwert, vorzugsweise bei der Hälfte, der versteilerten Anstiegsflanke in das zugeordnete Ausgangsregister r1 bzw. r2 eingelesen wird, während dagegen zu allen anderen Zeiten als zum Zeitpunkt des Zwischenwerts der versteilerten Anstiegsflanke der Eingang des zugeordneten Ausgangsregisters zum Ausgang des entsprechenden Verzögerers v1 bzw. v2 durchgeschaltet ist.

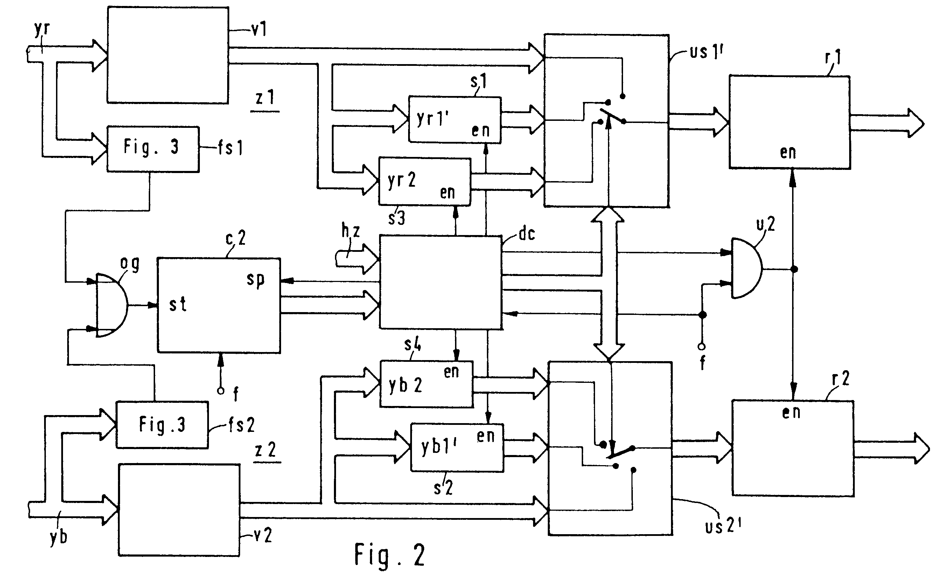

Die Fig. 2 zeigt wiederum in Form eines Blockschaltbilds eine ausgestaltende Weiterbildung der Anordnung nach Fig. 1. Die Weiterbildung besteht im wesentlichen darin, daß der erste bzw. zweite Speicher s1, s2 nach Fig. 1 durch den dritten bzw. vierten Speicher s3, s4 ergänzt ist, der signalflußmäßig dem jeweils ersterwähnten Speicher parallelgeschaltet ist, und daß die beiden Umschalter us1, us2 nach Fig. 1 zu Mehrfachumschaltern us1', us2' derart erweitert sind, daß jeweils ein weiterer Eingang mit dem Ausgang des dritten bzw. vierten Speichers s3, s4 verbunden ist.

Der erwähnte ausgestaltende Teil der Fig. 2 betrifft die Ablaufsteuerung ab nach Fig. 1. In Fig. 2 sind hierfür der das Taktsignal f zählende Zähler c2, der Decoder dc sowie das UND-Gatter us vorgesehen. Der Starteingang st des Zählers c2, mit dem die Zählung freigegeben wird, ist mit dem Ausgang des ODER-Gatters og verbunden, während der Stopeingang sp vom Decoder dc angesteuert ist. Diesem ist auch das Digitalsignal hz, vgl. Fig. 1, zugeführt.

Die Decodierung der Zählerstände des Zählers c2 erfolgt derart, daß in den ersten bzw. zweiten Speicher s1, s2 der am Ende des ersten Drittels der Haltezeit auftretende Rot- bzw. Blau-Farbdifferenzsignal-Wert yr1' bzw. yb1', dagegen in den dritten bzw. vierten Speicher s3, s4 der am Ende des zweiten Drittels der Haltezeit auftretende Rot- bzw. Blau-Farbdifferenzsignal-Wert yr2 bzw. yb2 eingelesen wird. Diese Speicherinhalte der vier Speicher s1...s4 gelangen über die beiden Umschalter us1', us2' am Ende des ersten bzw. zweiten Drittels der versteilerten Anstiegsflanke in das jeweilige Ausgangsregister r1, r2, und deren jeweiliger Eingang ist außer am Ende des ersten und des zweiten Drittels der versteilerten Anstiegsflanke zum Ausgang des ersten bzw. zweiten Verzögerers v1, v2 durchgeschaltet.

Am einen Eingang des erwähnten UND-Gatters u2 liegt das Taktsignal f, während an dessen anderem Eingang einer der Ausgänge des Decoders dc angeschlossen ist und dessen Ausgang mit dem Speicherübernahme-Eingang en des ersten und zweiten Ausgangsregisters r1, r2 verbunden ist.

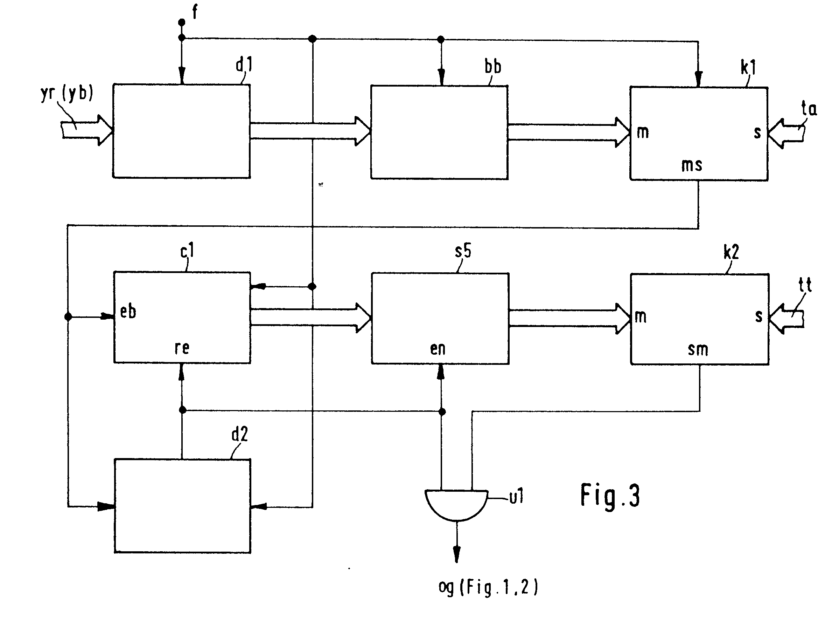

In Fig. 3 ist in Form eines Blockschaltbilds eine bevorzugte Ausführungsform der Schaltung für die Flankensteilheitsdetektoren fs1, fs2 gezeigt. Vom Eingang für das Farbdifferenzsignal yr bzw. yb aus liegen signalflußmäßig das erste digitale Differenzierglied d1, der digitale Betragsbildner bb und der Minuend-Eingang m des ersten digitalen Komparators k1 in Reihe. Dessen Subtrahend-Eingang s ist das dem Amplituden-Schwellwert entsprechende Digitalsignal ta zugeführt.

Der Betragsbildner bb gibt an seinem Ausgang jeweils solche Digitalwerte, die bezüglich ihres Eingangswerts nicht mehr vorzeichenbehaftet sind, denen also beispielsweise das Vorzeichenbit fehlt. Dies bedeutet schaltungstechnisch, daß der Betragsbildner bb einen Schaltungsteil enthält, der aus negativen Digitalzahlen z. B. in Einer- oder Zweier-Komplementdarstellung die entsprechende positive Digitalzahl erzeugt, wozu er in diesem Falle einen Komplement-Rückwandler enthält.

Unter einem Komparator soll hier eine Digitalschaltung verstanden werden, die einen Vergleich der an den beiden Eingängen anliegenden Digitalsignale dahingehend vornimmt, welches der beiden Signale größer als das andere ist. Da diese Vergleichsbildung der Rechenoperation einer Differenzbildung rein formal näher steht als der einer Addition, obwohl die konkrete Innenschaltung solcher Komparatoren denen von Addierern ähnlicher ist als denen von Subtrahierern, werden aus Eindeutigkeitsgründen die beiden Eingänge wie bei einem Subtrahierer mit Minuend-Eingang bzw. Subtrahend-Eingang bezeichnet. Als logische Ausgangssignale kommen drei Signale für «Minuend größer Subtrahend», «Subtrahend größer Minuend» und «Minuend gleich Subtrahend» als sinnvoll in Betracht, und dementsprechend sind, wie im folgenden vorgesehen ist, entsprechende Ausgänge mit den eben genannten Bezeichnungen vorhanden. Am Minuend-größer-Subtrahend-Ausgang eines Komparators tritt bei vorausgesetzter positiver Logik also der positivere zweier Binärpegel auf, wenn und solange der Minuend größer als der Subtrahend ist. Es ist selbstverständlich, daß im Bedarfsfall der an diesem Ausgang auftretende negativere der beiden Binärpegel dazu dienen kann, die Funktion «Minuend kleiner Subtrahend» zu signalisieren, was dann allerdings negativer Logik entsprechen würde.

Beim Flankensteilheitsdetektor nach Fig. 3 sind ferner der Enable-Eingang eb des das Taktsignal f zählenden ersten Zählers c1 und der Eingang des zweiten digitalen Differenziergliedes d2 mit dem Minuend-größer-Subtrahend-Ausgang ms des ersten Komparators k1 verbunden. Die Zählerstandausgänge des ersten Zählers c1 liegen am Eingang des fünften Speichers s5, dessen Ausgang am Minuend-Eingang m des zweiten digitalen Komparators k2 angeschlossen ist. Dessen Subtrahend-Eingang s ist ein dem Zeitschwellwert entsprechendes Digitalsignal tt zugeführt.

Der Reset-Eingang re des ersten Zählers c1, der Speicherübernahmeeingang en des fünften Speichers s5 und der erste Eingang des ersten UND-Gatters u1 liegen am Ausgang des zweiten Differenziergliedes d2. Schließlich ist der Subtrahend-größer-Minuend-Ausgang sm des zweiten Komparators k2 mit dem zweiten Eingang des zweiten UND-Gatters u2 verbunden, dessen Ausgang zum ODER-Gatter nach Fig. 1 oder 2 führt. Die Teilschaltungen d1, bb, k1, d2 und, wie bereits erwähnt c1, sind am Taktsignal f betriebene Schaltungen.

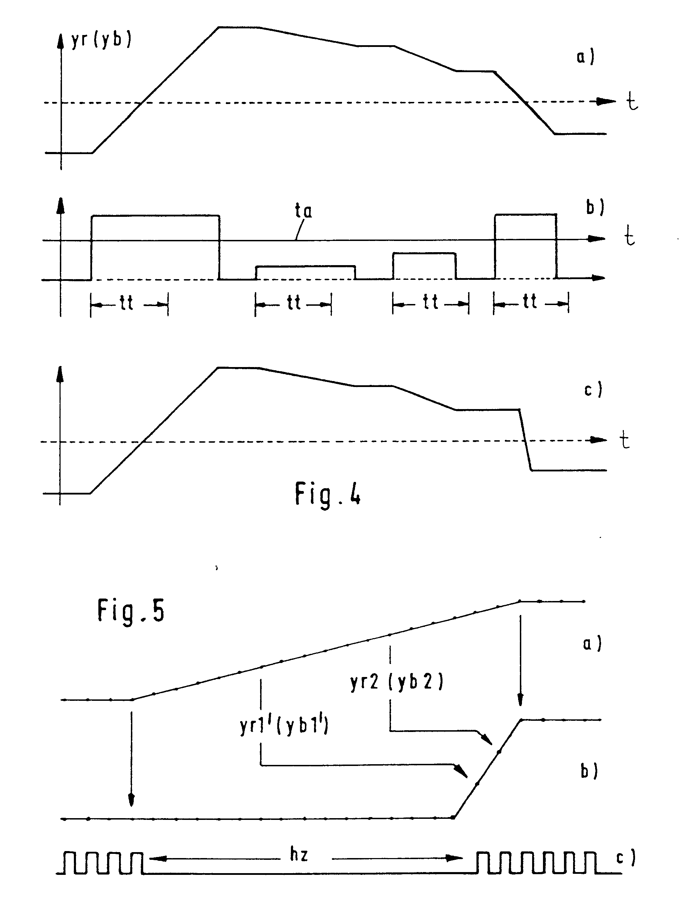

Zur Veranschaulichung der Wirkungsweise der erfindungsgemäßen Schaltungsanordnung sollen die Fig. 4 und 5 dienen. Fig. 4a zeigt den angenommenen Verlauf eines der beiden Farbdifferenzsignale yr, bzw. yb, wobei angemerkt sei, daß für die Darstellung in diesen Figuren aus Anschaulichkeitsgründen die für Analogsignale übliche Darstellungsweise gewählt ist.

Die Fig. 4b zeigt das Ausgangssignal des Betragsbildners b sowie den dem Digitalsignal ta entsprechenden Amplitudenschwellwert. Ferner ist der dem Digitalsignal tt entsprechende Zeit-Schwellwert eingezeichnet. Die Fig. 4c zeigt schließlich den dem Verlauf nach Fig. 4a entsprechenden, jedoch abfallversteilerten Verlauf des vorausgesetzten Farbdifferenzsignals, wie es am Ausgang des Ausgangsregisters r1, r2 nach Fig. 1 oder 2 auftritt. Der Vergleich der Fig. 4a und c zeigt, daß die letzte, rechts in diesen beiden Figuren gezeichnete Flanke versteilert ist. Da während dieser Flanke sowohl der Amplitudenschwellwert überschritten als auch der Zeitschwellwert unterschritten ist (vgl. die Verwendung des Subtrahend-größer-Minuend-Ausgangs sm des zweiten Komparators k2), wird die Versteilerungsfunktion wirksam. Der erste Komparator k1 gibt nämlich am Minuend-größer-Subtrahend-Ausgang ms solange ein Signal ab, wie das Ausgangssignal des Betragsbildners bb größer als der Amplitudenschwellwert ist. Während dieser Zeit kann der erste Zähler c1 die Taktsignale zählen, bis er von einem mittels des zweiten Differenzierglieds d2 aus der Rückflanke des Ausgangssignals des ersten Komparators k1 gebildeten Signal wieder zurückgesetzt wird. Der kurz zuvor erreichte Zählerstand des Zählers c1 wird in den fünften Speicher s5 übernommen und mittels des zweiten Komparators k2 mit dem Zeitschwellwert verglichen. Ist dieser größer als die mittels des Zählers c1 gemessene Zeitdauer, so läuft die oben bereits erwähnte Funktion ab.

Die Fig. 5 dient zur Erläuterung der Bildung der versteilerten Flanke. Fig. 5a zeigt dabei den flachen Verlauf einer zur Erläuterung herangezogenen Flanke. Der Abstand zwischen den in den Fig. 5a und b in den Kurvenverlauf eingezeichneten Punkte soll dabei die Periodendauer des Taktsignals f veranschaulichen. Die Fig. 5c zeigt den Kurvenverlauf am jeweiligen Speicherübernahmeeingang en der Ausgangsregister r1, r2. Beim zwischen den Fig. 5a und b links eingezeichneten Pfeil wird das zuvor an diesen Eingängen im Takt des Taktsignals f periodisch anliegende Signal sozusagen gestoppt, so daß über mehrere Taktperioden hinweg keine Signale in die Ausgangsregister r1, r2 übernommen werden, sondern das am Ende der «Taktung» des Speicherübernahmeeingangs en eingelesene Signal in diesen Registern stehenbleibt. Die am Ende des ersten Drittels und des zweiten Drittels der langsam ansteigenden Flanke der Fig. 5a in die Speicher s1, s2 bzw. s3, s4 eingelesenen Signalwerte yr1', yb1' bzw. yr2, yb2 werden, nachdem die «Taktung» des jeweiligen Speicherübernahmeeingangs der Ausgangsregister r1, r2 zu Beginn der zu versteilernden Flanke wieder eingesetzt hat, am Ende des ersten bzw. zweiten Drittels dieser zu versteilernden Flanke in die Ausgangsregister r1, r2 übernommen. Der ganz rechts zwischen den Fig. 5a und 5b eingezeichnete Pfeil soll veranschaulichen, daß am Ende der flachen Flanke von Fig. 5a die versteilerte Flanke nach Fig. 5b den entsprechenden Signalwert erreicht hat.

Die Zeitdauer, für die nach Fig. 5c die «Taktung» der Speicherübernahmeeingänge en der Ausgangsregister r1, r2 «unterbrochen» ist, entspricht dem der Ablaufsteuerung ab nach Fig. 1 bzw. dem Decoder dc nach Fig. 2 zugeführten Digitalsignal hz.

Die erfindungsgemäße Schaltungsanordnung läßt sich ohne weiteres in monolithisch integrierter Form realisieren, wobei, da auschließlich Digitalschaltungen benutzt werden, die Integrierung mittels Isolierschicht-Feldeffekt-Transistoren, also die Anwendung der sogenannten MOS-Technik besonders vorteilhaft ist.

**Patentansprüche**

1. Schaltungsanordnung zur Versteilerung von Farbsignalsprüngen in Farbfernsehempfängern mit einem Flankensteilheitsdetektor, der bei Überschreiten eines vorgebbaren Amplitudenschwellwerts ein Schaltsignal abgibt, durch das an den jeweiligen Ausgang der beiden Farbdifferenzkanale für die Dauer von deren systembedingten Anstiegszeit ein Ersatzsignal gelegt ist, gekennzeichnet durch die Anwendung in einem digitalen Farbfernsehempfänger, der einen Analog-Digital-Wandler für das Ausgangssignal der ZF-Stufe, einen digitalen Demodulator zur Erzeugung der beiden digitalen Farbdifferenz-Signale (yr, yb) und einen Taktoszillator zu deren Betrieb enthält, dessen Taktsignal (f) die vierfache Farbhilfsträgerfrequenz hat, derart,

– daß die beiden Farbdifferenzsignale (yb, yr) einen ersten bzw. zweiten Schaltungszweig (z1, z2) gleichen Aufbaus durchlaufen, der aus folgenden Teilschaltungen besteht:

– aus einem digitalen Flankensteilheitsdetektor (fs1, fs2), dem zusätzlich zum Amplituden- auch ein Zeit-Schwellwert zugeführt ist,

– aus einem Verzögerer (v1, v2), dessen Verzögerungszeit gleich der des Flankensteilheitsdetektors (fs1, fs2) ist und dessen Eingang das digitale Farbdifferenzsignal (yr, yb) zugeführt ist,

– aus mindestens einem Speicher (s1, s2), dessen Eingang mit dem Ausgang des Verzögerers (v1, v2) verbunden ist,

– aus einem Umschalter (us1, us2), dessen erster Eingang am Ausgang des Verzögerers (v1, v2) und dessen zweiter Eingang am Ausgang des Speichers (s1, s2) liegt, und

– aus einem Ausgangsregister (r1, r2), dessen Eingang mit dem Ausgang des Umschalters (us1, us2) verbunden ist,

– daß der jeweilige Ausgang des ersten und des zweiten Flankensteilheitsdetektors (fs1, fs2) über ein ODER-Gatter (og) mit dem ersten Eingang einer Ablaufsteuerung (ab) verbunden ist, deren zweitem Eingang das Taktsignal (f) und deren drittem Eingang ein Digitalsignal (hz) bezüglich der Dauer der systembedingten Anstiegzeit eines Farbdifferenzkanals entsprechenden Haltezeit zugeführt ist, und

– daß die Ablaufsteuerung (ab) den Speicher, den Umschalter und das Ausgangsregister derart steuert,

– daß in den Speicher ein bei einem Zwischenwert der Haltezeit auftretender Farbdifferenzsignal-Wert (yr1, yb1) eingelesen wird,

– daß dieser Speicherinhalt über den Umschalter beim entsprechenden Zwischenwert der versteilerten Anstiegsflanke in das Ausgangsregister eingelesen wird, und

– daß dessen Eingang außer beim Zwischenwert der versteilerten Anstiegsflanke zum Ausgang des Verzögerers durchgeschaltet ist.

2. Schaltungsanordnung nach Anspruch 1, dadurch gekennzeichnet, daß jeder Flankensteilheitsdetektor (fs1, fs2) wie folgt aufgebaut ist:

– vom Eingang für das Farbdifferenzsignal (yr, yb) aus liegen signalflußmäßig ein erstes digitales Differenzierglied (d1), ein digitaler Betragsbildner (bb) und der Minuend-Eingang (m) eines ersten digitalen Komparators (k1) in Reihe, dessen Subtrahend-Eingang (s) ein dem Amplitudenschwellwert entsprechendes Digitalsignal (ta) zugeführt ist,

– der Enable-Eingang (eb) eines das Taktsignal (f) zählenden ersten Zählers (1) und der Eingang eines zweiten digitalen Differenzierglieds (d2) sind mit dem Minuend-größer-Subtrahend-Ausgang (ms) des ersten Komparators (k1) verbunden, während seine Zählerstandausgänge am Eingang eines fünften Speichers (s5) liegen, dessen Ausgang am Minuend-Eingang (m) eines zweiten digitalen Komparators (k2) angeschlossen ist, dessen Subtrahend-Eingang (s) ein dem Zeitschwellwert entsprechendes Digitalsignal (tt) zugeführt ist,

– der Reset-Eingang (re) des ersten Zählers (c1), der Speicherübernahmeeingang (en) des fünften Speichers (s5) und der erste Eingang eines ersten UND-Gatters (u1) liegen am Ausgang des zweiten Differenzierglieds (d2), und

– der Subtrahend-größer-Minuend-Ausgang (sm) des zweiten Komparators liegt am zweiten Eingang des ersten UND-Gatters (u1), dessen Ausgang mit einem der Eingänge des ODER-Gatters (og) verbunden ist.

3. Schaltungsanordnung nach Anspruch 1 oder 2, gekennzeichnet durch folgende Merkmale:

– es sind ein erster, ein zweiter, ein dritter und ein vierter Speicher (s1, s2, s3, s4) vorhanden, von denen der Eingang des ersten und dritten mit dem Ausgang eines ersten Verzögerers (v1) bzw. der Eingang des zweiten und vierten Speichers mit dem Ausgang eines zweiten Verzögerers (v2) verbunden ist,

– die Umschalter (us1, us2) sind ein erster bzw. ein zweiter Mehrfachumschalter (us1', us2') mit jeweils drei Eingängen, von denen der jeweils erste am Ausgang des ersten bzw. des zweiten Verzögerers (v1, v2), der jeweils zweite am Ausgang des ersten bzw. zweiten Speichers (s1, s2) und der jeweils dritte am Ausgang des dritten bzw. vierten Speichers (s3, s4) liegt,

– der Ausgang des ODER-Gatters (og) liegt am Start-Eingang (st) eines das Taktsignal (f) zählenden zweiten Zählers (c2), dessen Zählerstände über die beiden Mehrfachumschalter (us1', us2'), den jeweiligen Speicherübernahmeeingang (en) der vier Speicher (s1...s4) und den ersten Eingang eines zweiten UND-Gatters (us) steuernden Decoder (dc), dem das Digitalsignal (hz) zugeführt ist, derart decodiert sind,

– daß in den ersten bzw. zweiten Speicher (s1, s2) der am Ende des ersten Drittels der Haltezeit auftretende Rot- bzw. Blau-Farbdifferenzsignal-Wert (yr1', yb1') bzw. in den dritten bzw. vierten Speicher (s3, s4) der am Ende des zweiten Drittels der Haltezeit auftretende Rot- bzw. Blau-Farbdifferenzsignal-Wert (yr2, yb2) eingelesen wird,

– daß der jeweilige Speicherinhalt der vier Speicher (s1...s4) über die beiden Mehrfachumschalter (us1', us2') am Ende des ersten bzw. zweiten Drittels der versteilerten Anstiegsflanke in das jeweilige Ausgangsregister (r1, r2) eingelesen wird, und

– daß deren jeweiliger Eingang außer am Ende des ersten und des zweiten Drittels der versteilerten Anstiegsflanke zum Ausgang des ersten bzw. zweiten Verzögerers (v1, v2) durchgeschaltet ist, und

– das Taktsignal (f) liegt am zweiten Eingang des zweiten UND-Gatters (u2), dessen Ausgang mit dem Speicherübernahmeeingang (en) des ersten und zweiten Ausgangsregisters (r1, r2) verbunden ist.

## Claims

1. Circuit arrangement for increasing the slope of color transients in color-television receivers, comprising a slope detector which, when a predeterminable amplitude threshold value is exceeded, delivers a switching signal which causes a substitute signal to appear at the respective output of the two color-difference channels for the duration of the system rise time of said channels, characterized by its use a digital color-television receiver containing an analog-to-digital converter for the output signal of the IF stage, a digital demodulator for producing the two digital color-difference signals (yr, yb), and a clock oscillator providing a clock signal (f) having four times the chrominance-subcarrier frequency, such

– that the two color-difference signals (yb, yr) pass through a first branch (z1) and a second branch (z2), respectively, which are of the same design and each of which consists of the following subcircuits:

– a digital slope detector (fs1, fs2) to which a time threshold value is fed in addition to the amplitude threshold value,

– a delay element (v1, v2) which provides a delay equal to that of the slope detector (fs1, fs2), and whose input is presented with the digital color-difference signal (yr, yb),

– at least one memory (s1, s2) having its input connected to the output of the delay element (v1, v2),

– a switch (us1, us2) having its first and second inputs connected to the output of the delay element (v1, v2) and to the output of the memory (s1, s2), respectively, and

– an output register (r1, r2) having its input connected to the output of the switch (us1, us2),

– that the outputs of the first and second slope detectors (fs1, fs2) are connected via an OR gate (og) to the first input of a sequence controller (ab) whose second input is supplied with the clock signal (f), and whose third input is presented with a digital signal (hz) determining the hold time equal to the system, rise time of the respective color-difference channel, and

– that the sequence controller (ab) controls the memory, the switch, and the output register in such a way

– that a color-difference-signal value (yr1, yb1) occurring at an intermediate value of the hold time is read into the memory,

– that these memory contents are read via the switch into the output register at the corresponding intermediate value of the steepened leading edge, and

– that the input of the output register is connected to the output of the delay element at all times except at the intermediate value of the steepened leading edge.

2. An arrangement as claimed in claim 1, characterized in that each of the slope detectors (fs1, fs2) is constructed as follows:

– The input for the color-difference signal (yr, yb) is followed by the series combination of a first digital differentiator (d1), a digital absolute-value stage (bb), and the minuend input (m) of a first digital comparator (k1) the subtrahend input (s) of which is supplied with a digital signal (ta) corresponding to the amplitude threshold value;

– the enable input (eb) of a first counter (c1), which counts the pulses of the clock signal (s), and one of the inputs of a second digital differentiator (d2) are connected to the minuend-greater-than-subtrahend outputs (ms) of the first comparator (k1), while the count outputs of said first counter (c1) are coupled to the input of a fifth memory (s5) having its output connected to the minuend input (m) of a second digital comparator (k2) the subtrahend input (s) of which is supplied with a digital signal (tt) corresponding to the time threshold value;

– the reset input (re) of the first counter (c1), the enable input (en) of the fifth memory (s5), and the first input of a first AND gate (u1) are connected to the output of the second differentiator (d2), and

– the subtrahend-greater-than-minuend output (sm) of a second comparator (k2) is coupled to the second input of the first AND gate (u1), whose output is connected to one of the inputs of the OR gate (og).

3. A circuit arrangement as claimed in claim 1 or 2, characterized by the following features:

– There are provided first, second, third, and fourth memories (s1, s2, s3, s4) the inputs of the first and third of which are connected to the output of the first delay element (v1), and the inputs of the second and fourth of which are connected to the output of a second delay element (v2);

– the switches (us1, us2) are first and second multiposition switches (us1', us2') each having three inputs the first of which is connected to the outputs of the first and second delay elements (v1, v2), respectively, and the second of which is connected to the outputs of the first and second memories (s1, s2), respectively, while the third of which is connected to the outputs of the third and fourth memories (s3, s4), respectively;

– the output of the OR gate (og) is coupled to the start input (st) of a counter (c2) which counts the pulses of the clock signal (f), and whose counts are decoded by a decoder (dc) fed with the digital signal (hz) and controlling the two multiposition switches (us1', us2'), the enable inputs (en) of the four memories (s1...s4), and the first input of a second AND gate (u2), such

– that the red- and blue-minus-luminance signal values (yr1', yb1') occurring at the end of the first third of the hold time are written into the first and second memories (s1, s2), respectively, whereas the red- and blue-minus-luminance signal values (yr2, yb2) occurring at the end of the second third of the hold time are written into the third and fourth memories (s3, s4), respectively,

– that the contents of the first and third memories (s1, s3) are written via the first multiposition switch (us1') into one of the output registers (r1) at the end of the first third of the steepened leading edge, whereas the contents of the second and fourth memories (s2, s4) are written via the second multiposition switch (us2') into the other output register (r2) at the end of the second third of the steepened leading edge, and

– that the inputs of the two output registers (r1, r2) are connected to the outputs of the first and second delay elements (v1, v2), respectively, at all times except at the end of the first third and the second third, respectively, of the steepened leading edge, and

– the clock signal (f) is applied to the second input of the second AND gate (u2), the output of which is connected to the enable inputs (en) of the two output registers (r1, r2).

**Revendications**

1. Montage pour accroître la pente de sauts de signaux chromatiques dans des récepteurs de télévision en couleurs, comportant un détecteur de la pente des flancs des signaux, qui, lors du dépassement d'une valeur de seuil d'amplitude pouvant être prédéterminée, délivre un signal de commutation, grâce auquel un signal de remplacement est appliqué à la sortie respective des deux canaux transmettant les différences de couleur, pendant la durée de leur temps de montée conditionné par le système, caractérisé par son utilisation dans un récepteur numérique de télévision en couleurs, qui contient un convertisseur analogique/numérique pour le signal de sortie de l'étage à fréquence intermédiaire, un démodulateur numérique pour la production des deux signaux numériques de différence de couleur (yr, yb) et un oscillateur fournissant la cadence pour le fonctionnement de ce montage et dont le signal de cadence (f) possède une fréquence égale au quadruple de la fréquence de la porteuse auxiliaire couleur, de telle sorte

– que les deux signaux de différence de couleur (yb, yr) traversent des première et seconde branches de circuit (z1, z2), qui possèdent une même constitution incluant les circuits partiels suivants:

– Un détecteur numérique (fs1, fs2) de la pente des flancs des signaux, auquel une valeur de seuil de temps est envoyée, en plus d'une valeur de seuil d'amplitude,

– un circuit de retardement (v1, v2), qui produit un retard égal à celui fourni par le détecteur (fs1, fs2) de la pente des flancs des signaux et à l'entrée duquel est envoyé le signal numérique de différence de couleur (yr, yb),

– au moins une mémoire (s1, s2), dont l'entrée est reliée à la sortie du circuit de retardement (v1, v2),

– un commutateur (us1, us2), dont la première entrée est raccordée à la sortie du circuit de retardement (v1, v2) et dont la seconde entrée est raccordée à la sortie de la mémoire (s1, s2), et

– un registre de sortie (r1, r2), dont l'entrée est reliée à la sortie du commutateur (us1, us2),

– que la sortie respective des premier et second détecteurs (fs1, fs2) de la pente des flancs des impulsions est reliée, par l'intermédiaire d'une porte OU (og), à la première entrée d'un dispositif (ab) de commande d'exécution, à la seconde entrée duquel est envoyé le signal de cadence (f) et à la troisième entrée duquel est envoyé un signal numérique (hz) relatif au temps de maintien correspondant à la durée du temps de montée, conditionné par le système, d'un canal transmettant la différence de couleur, et

– que le dispositif (ab) de commande d'exécution commande la mémoire, le commutateur et le registre de sortie, de manière

– qu'une valeur (yr1, yb1) du signal de différence de couleur, qui apparaît pour une valeur intermédiaire du temps de maintien, est mémorisée dans la mémoire,

– que ce contenu de la mémoire est introduit, par l'intermédiaire du commutateur, dans le registre de sortie, pour une valeur intermédiaire correspondante du flanc de montée, dont la pente est accrue, et

– que l'entrée de ce registre est interconnectée à la sortie du dispositif de retardement, pour des valeurs autres que la valeur intermédiaire du flanc de montée, dont la pente est accrue.

2. Montage selon la revendication 1, caractérisé en ce que chaque détecteur (fs1, fs2) de la pente des flancs des impulsions possède la constitution suivante:

– à partir de l'entrée du signal de différence de couleur (ya, yb) se trouvent branchés, en série du point de vue du flux de transmission des signaux, un premier étage différentiateur numérique (d1), un dispositif numérique (bb) de formation de la valeur absolue et l'entrée (m) du diminuende d'un premier comparateur numérique (k1), dont l'entrée (s) du nombre à soustraire reçoit un signal numérique (ta) correspondant à la valeur de seuil d'amplitude,

– l'entrée de validation (eb) d'un premier compteur (c1) comptant le signal de cadence (f) et l'entrée d'un second circuit différentiateur numérique (d2) sont reliées à la sortie (ms), prévue pour le signal «diminuende supérieur au nombre à soustraire», du premier comparateur (k1), tandis que les sorties des états de comptage de compteur sont raccordées à l'entrée d'une cinquième mémoire (s5), dont la sortie est raccordée à l'entrée (m) du diminuende d'un second comparateur numérique (k2), dont l'entrée (s) du nombre à soustraire reçoit un signal numérique (tt) correspondant à la valeur de seuil de temps,

– l'entrée de remise à zéro (re) du premier compteur (c1), l'entrée de réception (en) de la cinquième mémoire (s5) et la première entrée d'une première porte ET (u) sont raccordées à la sortie du second circuit différentiateur (d2), et

– la sortie (sm) , prévue pour le signal «nombre à soustraire supérieur au diminuende», du second comparateur est raccordée à la seconde entrée de la première porte ET (u1), dont la sortie est raccordée à l'une des entrées de la porte OU (og).

3. Montage suivant la revendication 1 ou 2, caractérisé par les caractéristiques suivantes:

– il est prévu, une première, une seconde, une troisième et une quatrième mémoires (s1, s2, s3, s4), les entrées des première et troisième mémoire étant raccordées à la sortie d'un premier dispositif de retardement (v1) et les entrées des seconds et quatrième mémoires étant reliées à la sortie d'un second dispositif de retardement (v2),

– les commutateurs (us1, us2) sont constitués par des premier et second commutateurs multiples (us1', us2') comportant chacun trois entrées, dont la première est raccordée respectivement à la sortie du premier ou du second dispositif de retardement (v1, v2), dont la seconde est raccordée respectivement à la sortie de la première ou de la seconde mémoire (s1, s2) et dont la troisième est raccordée à la sortie de la troisième ou de la quatrième mémoire (s3,s4),

– la sortie de la porte OU (og) est raccordée à l'entrée de démarrage (st) d'un second compteur (c2), qui compte le signal de cadence (f) et dont les états de comptage sont décodés par l'intermédiaire d'un décodeur (dc) qui commande les deux commutateurs multiples (us1', us2'), les entrées respectives de charge (en) des quatre mémoires (s1...s4) et la première entrée d'une seconde porte ET (u2) et auquel est envoyé le signal numérique (hz), de telle sorte

– que la valeur du signal de différence de la couleur rouge ou bleue (yr1', yb1'), qui apparaît à la fin du premier tiers du temps de maintien, est mémorisée dans la première ou la seconde mémoire (s1, s2) et la valeur du signal de différence de couleur rouge ou bleue (yr2, yb2), qui apparaît à la fin du deuxième tiers du temps de maintien, est mémorisée dans la troisième ou la quatrième mémoire (s3, s4),

– que le contenu respectif des quatre mémoires (s1...s4) est mémorisé, par l'intermédiaire des deux commutateurs multiples (us1', us2') à la fin du premier ou du second tiers du flanc de montée, dont la pente est accrue, est mémorisé dans le registre de sortie respectif (r1, r2), et

– que l'entrée respective de ces registres est interconnectée à un autre moment qu'à la fin du premier et du second tiers du flanc de montée, dont la pente est accrue, à la sortie du premier ou du second dispositif de retardement (v1, v2), et

– que le signal de cadence (f) est appliqué à la seconde entrée de la seconde porte ET (u2), dont la sortie est reliée à l'entrée de chargement (en) des premier et second registres de sortie (r1, r2).

Fig. 1

Fig. 2

Fig.3

Fig. 4

Fig. 5